# EUROPEAN PATENT SPECIFICATION

(11) **EP 3 181 413 B1**
(45) Date of publication and mention of the grant of the patent: **19.09.2018**
(21) Application number: 15200924.7
(22) Date of filing: 17.12.2015
(51) Int. Cl.: B60R 22/36, B60R 22/48

(54) **ELECTRIC SEATBELT RETRACTOR**
ELEKTRISCHER SITZGURTAUFROLLER
RÉTRACTEUR DE CEINTURE DE SÉCURITÉ ÉLECTRIQUE

(43) Date of publication of application: 21.06.2017
(73) Proprietor: Autoliv Development AB, 447 83 Vårgårda (SE)
(72) Inventor: Shanmugam, Saravana, 562 114 Bangalore (IN); Atwadkar, Abhijeet, 562 114 Bangalore (IN); Kumar, Ponnusamy Senthil, 562 114 Bangalore (IN)
(74) Representative: Müller Verweyen

(56) References cited:
- DE-A1- 3 110 285
- DE-A1- 19 749 855
- DE-A1-102010 014 366
- US-A- 4 678 134
- US-A1- 2005 263 992

## Description

The invention relates to an electric seatbelt retractor comprising the features of the preamble of claim 1.

US4678134 A1 is the closest prior art document and discloses such an electric seatbelt retractor. Seatbelt systems in vehicles comprise a seatbelt retractor, a vehicle-fixed buckle and a webbing with a slidable tongue which may be locked in the buckle. The seatbelt retractor comprises a spindle onto which the webbing is wound up and which may rotate in a frame in pull-in as well as in pull-out direction of the webbing. The retractor is further provided with a blocking device for blocking the spindle in the pull-out direction when a predetermined value of the webbing pull-out speed or a predetermined value of the vehicle deceleration is exceeded. The blocking device is triggered by a mechanical webbing speed sensor and by a mechanical vehicle deceleration sensor. Furthermore, it is known to provide the seatbelt retractor with irreversible and reversible pretensioning devices, which pull out a possible slack out of the webbing in a precrash situation or in an early phase of the crash to couple the occupant closer to the vehicle deceleration. The reversible pretensioner is realized in modern seatbelt systems by an electric motor, which may be coupled with the spindle by a clutch. The clutch is closed for example by friction or inertia forces when the electric motor is activated.

As the electric motor increases the price of the seatbelt retractor significantly it is intended to use the electric motor for as many as possible functions, for example to support the retracting movement into the parking position or to reduce the retracting force for comfort reasons or the like.

Furthermore, the seatbelt retractor needs to be provided with a sensor device which provides a signal for controlling the electric motor. The sensor devices in existing seatbelt re-tractors are realized for example by magnet wheels with a plurality of magnet poles with different polarization, which are fixed at the spindle. The magnet poles comprise identical dimensions and are arranged at the circumference of the magnet wheel in a regular arrangement. Furthermore, the sensor devices comprise a sensor, for example a hall sensor, which is positioned face to the magnet poles of the magnet wheels at a frame of the retractor. The sensor devices detect the rotational movement of the spindle, wherein the detected rotational angle or the detected revolutions are used to trigger the electric motor, wherein the signal may be processed further in a CPU. The rotational movement or the rotational position of the spindle is used here also as a representative signal for the webbing pull-out length, which is at least one of the essential criteria when actuating the electric motor for extraction and retraction of the webbing.

In view to that background it is the object of the invention to provide an electric seatbelt retractor with an electric motor which can be triggered with an improved precision to provide a predetermined webbing pull-out length in different situations.

The object of the invention is solved by an electric seatbelt retractor comprising the features of claim 1. Further improvements are contained in the sub claims, in the figures and in the related description.

According to the basic idea it is suggested that the sensor device comprises at least in one section of the webbing a pattern of several identification marks which are arranged in length direction of the webbing equidistant to each other, and a sensor which is directed onto the webbing in a predetermined orientation to generate a signal when an identification mark of the pattern passes thereon.

The advantage of the suggested solution can be seen therein that the movement of the webbing during the retraction or extraction is detected directly, because the sensor detects directly the movement by generating each time a signal when an identification mark passes thereon. As the identification marks are arranged equidistant at the webbing the frequency of the signal enables a direct calculation of the retraction or extraction speed out of the signal and with considering the time it is also possible to calculate the extracted or retracted webbing length directly out of the signal. Therefore, the webbing pull-out length can be detected with a much higher precision. Especially there is no influence of the diameter belt sleeve on the spindle or of the package density on the calculated webbing length anymore, as the identification marks are arranged directly on the webbing and are detected when passing the sensor after retraction or before extraction on the spindle. Furthermore, the sensor at the retractor which was needed in the previous design can be omitted, so the retractor can be designed in a more compact manner.

According to the invention at least two sensors are provided which are arranged in length direction of the webbing in a distance to each other. The different sensors are generating two signals with an offset. Under consideration of the sequence this offset enables the detection of the direction if the webbing is extracted or retracted in a very easy manner. Furthermore, both sensors may be designed to generate a signal when a predetermined identification mark passes, so that the two sensors can be designed to fulfill different functions. So the first sensor can be designed for example to detect the initial movement of the webbing to give an input to the electric motor. The second sensor can be designed or used afterwards to detect when the extraction is terminated and give an input to the motor for retraction of the webbing which exerts the required force to remove slack out of the webbing.

According to the invention the pattern of identification marks comprises a group of first identification marks which are identical and generates an identical signal when passing the sensor and at least one second identification mark is provided at a defined position of the webbing which generates a different signal when passing the sensor. The signals generated by the first group of identification marks may be used for example to detect the pull-out or pull-in speed of the webbing, while the different signal of the second identification mark can be used to detect a predetermined position for example to identify the full retraction or extraction of the webbing and to give an input to activate or deactivate the electric motor. Furthermore, the second identification mark can be also positioned at a defined position in the middle of the webbing at a defined webbing pull-out length to trigger for example a load limiting system to a different load limiting level or to trigger the electric motor for a comfort system, with decreasing or increasing the retraction force level. According to a further preferred embodiment it is suggested that the second identification mark is arranged at a section of the webbing which passes the sensor before the first identification mark passes the sensor when the webbing is extracted from a parking position. The electric motor is triggered by a signal generated by passing the second identification mark to support the retraction movement of the webbing by driving the spindle in out-put direction. When the webbing is retracted to the parking position the second identification mark passes the sensor after the first identification marks when the webbing is at least nearly fully retracted. The electric motor is then deactivated by the signal generated when the second identification mark passes the sensor.

The identification marks may be realized by optical marks, and the sensor is realized by an optical sensor. Optical marks could be colored sections or a section of the webbing with a different weaving pattern.

Alternatively the optical marks could also be a reflecting section or a small window in the webbing. The optical sensor can be realized as a photodiode or the like. Additionally a light source can be provided, which emits a light beam onto the optical mark, wherein the reflected light beam or the light beam passing the window is then detected by the sensor, when the optical mark passes the sensor.

Furthermore, the identification marks may be also realized by conductive sections, and the sensor is realized by an inductive sensor, wherein the conductive sections can be realized preferably by one or more conductive weft yarns in the webbing. The advantage of this embodiment is that the conductive section generates an electric signal when passing the sensor, which can very easily be further processed in a CPU to a signal for triggering the electric motor. Furthermore, the identification mark can be manufactured in this case very easily by weaving one or more conductive weft yarn into the webbing. If more than one conductive yarn is used the conductive yarns are weaved in a bunch into the webbing, by which the signal generated by the identification mark may be increased.

Alternatively the identification marks may also be realized by magnetic marks, wherein the sensor is realized in this case by a magnetic sensor, and the magnetic marks are realized preferably by one or more magnetic weft yarns.

Furthermore, it is suggested that the sensor is arranged to be contactless to the webbing, so that there is no friction created which would retard the retraction and extraction movement of the webbing. Furthermore, there is no abrasion between the webbing and the sensor.

In the following the invention shall be illustrated on the basis of a preferred embodiment with reference to the accompanying drawings, wherein:
- Fig. 1: shows an electric seatbelt retractor according to the invention in front view; and
- Fig. 2: shows the seatbelt retractor in side view.

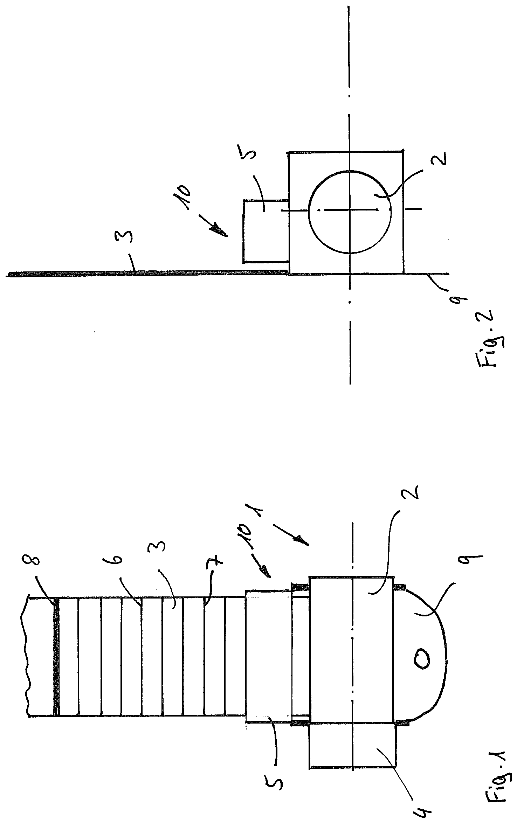

In Figure 2 it is shown an electric seatbelt retractor 1 with a frame 9, a spindle 2, a webbing 3, an electric motor 4 and a sensor device 10 with a sensor 5. The electric seatbelt retractor 1 can be attached with the frame 9 at a vehicle structure. The webbing 3 is wound onto the spindle 2, which is mounted rotatable in the frame 9, and which may be driven by the electric motor 4 in the webbing 3 pull-in as well as in webbing 3 pull-out directions. Between the electric motor 4 and the spindle 2 may be provided a clutch which may be closed or opened by a control unit or which may open or close by friction or inertia forces.

The sensor device 10 comprises the sensor 5 and a pattern of identification marks 6 at the webbing 3. The identification marks 6 comprise further a group of first identification marks 7 and a second identification mark 8. The identification marks 6 are here made of conductive weft yarns, for example of polyester with conductive particles. The identification marks 6 run therefore perpendicular to the length direction of the webbing 3 along the whole width of the webbing 3. The first identification marks 7 are made of a single or a bunch of weft yarns and are arranged in equal distances for example with a distance of 1 or 2 mm. The second identification mark 8 is made of a bunch of conductive weft yarns with many more single yarns, so that the second identification mark 8 is thicker and generates a different signal than the first identification marks 7 when passing the sensor 5. The sensor 5 is realized here as an inductive sensor 5. The second identification mark 8 is arranged in a first section of the webbing 3 which passes first when the webbing 3 is extracted from the parking position by the occupant after he has seated at the seat of the vehicle. The first identification marks 7 are arranged in a second section of the webbing 3 which passes afterwards the sensor 5 during the extraction. When the webbing is retracted after unbuckling the tongue first the second section with the first identification marks 7 are passing the sensor 5 and then afterwards the second identification mark 8 passes the sensor 5. As the second identification mark 8 is positioned in the first section passing the sensor 5 at first when the webbing is extracted from the parking position, the electric motor 4 is activated by the different signal of the sensor 5 which is generated when the second identification mark 8 passes. The first identification marks 7 are arranged over a length of the webbing 3 in a second section which passes the sensor 5 when the webbing 3 is retracted fully like for example of a 120 % male occupant. The signals generated by the first identification marks 7 when passing the sensor 5 are identical and result in a signal with a frequency out of which the webbing speed as well as the extracted webbing length can be calculated. The signal of the second identification mark 8 is used here also to initialize the sensor 5 and the processing unit, so that the extracted webbing length is calculated with the beginning when the second identification mark 8 passes the sensor 5. During the normal extraction and retraction the webbing 3 passes only with the first identification marks 7 the sensor 5. When the occupant releases the tongue from the buckle the webbing 3 is retracted by the electric motor 4 until the webbing 3 passes with the second identification mark 8 the sensor 5 and the electric motor 4 is deactivated.

The identification marks 6 are realized here as conductively marks, which generate a signal when passing the sensor 5. Alternatively also optical or magnetic identification marks 6 may be used. In these cases the sensor 5 must be changed against an optical or magnetic sensor 5, wherein also a light source may be provided, when the optical identification marks 6 and the signal are based on reflection.

## Claims

1. Electric seatbelt retractor (1) comprising
- a spindle (2) and a webbing (3) wound thereon, and
- an electric motor (4) driving the spindle (2) in pull-in or pull-up direction when activated, and
- a sensor device (10) detecting the webbing pullout length, wherein
- the sensor device (10) comprises at least in one section of the webbing (3) a pattern of several identification marks (6) which are arranged in length direction of the webbing (3) equidistant to each other, and
- a sensor (5) which is directed onto the webbing (3) in a predetermined orientation to generate a signal when an identification mark (6) of the pattern passes thereon, **characterized in that**
- at least two sensors (5) are provided which are arranged in length direction of the webbing (3) in a distance to each other, and
- the pattern of identification marks (6) comprises a group of first identification marks (7) which are identical and generate an identical signal when passing the sensor (5), and
- at least one second identification mark (8) is provided at a defined position of the webbing (3) which generates a different signal when passing the sensor (5).

2. Electric seatbelt retractor (1) according to claim 1, **characterized in that**
- the second identification mark (8) is arranged at a section of the webbing (3) which passes the sensor (5) before the first identification mark (7) passes the sensor (5) when the webbing (3) is extracted from a parking position.

3. Electric seatbelt retractor (1) according to one of the claims 1 or 2, **characterized in that**
- the identification marks (6) are realized by optical marks, and
- the sensor (5) is realized by an optical sensor.

4. Electric seatbelt retractor (1) according to claim 3, **characterized in that**
- the optical marks are made of one or more reflecting or colored weft yarns.

5. Electric seatbelt retractor (1) according to one of the claims 1 or 2, **characterized in that**
- the identification marks (6) are realized by conductive sections, and
- the sensor (5) is realized by an inductive sensor.

6. Electric seatbelt retractor (1) according to claim 5, **characterized in that**,
- the conductive sections are realized by one or more conductive weft yarns in the webbing (3).

7. Electric seatbelt retractor (1) according to one of the claims 1 or 2, **characterized in that**
- the identification marks (6) are realized by magnetic marks, and
- the sensor (5) is realized by a magnetic sensor.

8. Electric seatbelt retractor (1) according to claim 7, **characterized in that**
- the magnetic marks are realized by one or more magnetic weft yarns.

9. Electric seatbelt retractor (1) according to one of the claims 1 to 8, **characterized in that**,
- the sensor (5) is arranged to be contactless to the webbing (3).

## Patentansprüche

1. Elektrischer Sitzgurtaufroller (1), umfassend
- eine Spindel (2) und ein darauf gewickeltes Gurtband (3), und
- einen Elektromotor (4), der die Spindel (2) beim Einschalten in einer Einzug- oder Aufwärtszugrichtung antreibt, und
- eine Sensoreinrichtung (10), die die Gurtbandauszugslänge erfasst, wobei
- die Sensoreinrichtung (10) zumindest in einem Abschnitt des Gurtbands (3) ein Muster aus mehreren Kennmarkierungen (6) umfasst, die in Längenrichtung des Gurtbands (3) im selben Abstand zueinander angeordnet sind, und
- einen Sensor (5), der in einer bestimmten Ausrichtung auf das Gurtband (3) gerichtet ist, damit er ein Signal erzeugt, wenn sich eine Kennmarkierung (6) des Musters daran vorbeibewegt,
**dadurch gekennzeichnet, dass**
- mindestens zwei Sensoren (5) vorgesehen sind, die in der Längenrichtung des Gurtbands (3) in einem Abstand zueinander angeordnet sind, und
- das Muster aus Kennmarkierungen (6) eine Gruppe erster Kennmarkierungen (7) umfasst, die identisch sind und beim Vorbeibewegen am Sensor (5) ein identisches Signal erzeugen, und
- mindestens eine zweite Kennmarkierung (8) an einer festgelegten Position des Gurtbands (3) vorgesehen ist, die beim Vorbeibewegen am Sensor (5) ein anderes Signal erzeugt.

2. Elektrischer Sitzgurtaufroller (1) nach Anspruch 1, **dadurch gekennzeichnet, dass**
- die zweite Kennmarkierung (8) an einem Abschnitt des Gurtbands (3) angeordnet ist, der sich an dem Sensor (5) vorbeibewegt, bevor sich die erste Kennmarkierung (7) am Sensor (5) vorbeibewegt, wenn das Gurtband (3) aus einer Ruhestellung herausgezogen wird.

3. Elektrischer Sitzgurtaufroller (1) nach Anspruch 1 oder 2, **dadurch gekennzeichnet, dass**
- die Kennmarkierungen (6) als optische Markierungen ausgeführt sind, und
- der Sensor (5) als ein optischer Sensor ausgeführt ist.

4. Elektrischer Sitzgurtaufroller (1) nach Anspruch 3, **dadurch gekennzeichnet, dass**
- die optischen Markierungen aus einem oder mehreren reflektierenden oder farbigen Schussfäden aufgebaut sind.

5. Elektrischer Sitzgurtaufroller (1) nach Anspruch 1 oder 2, **dadurch gekennzeichnet, dass**
- die Kennmarkierungen (6) als leitfähige Abschnitte ausgeführt sind, und
- der Sensor (5) als ein induktiver Sensor ausgeführt ist.

6. Elektrischer Sitzgurtaufroller (1) nach Anspruch 5, **dadurch gekennzeichnet, dass**
- die leitfähigen Abschnitte als ein oder mehrere leitfähige Schussfäden in dem Gurtband (3) ausgeführt sind.

7. Elektrischer Sitzgurtaufroller (1) nach Anspruch 1 oder 2, **dadurch gekennzeichnet, dass**
- die Kennmarkierungen (6) als magnetische Markierungen ausgeführt sind, und
- der Sensor (5) als ein Magnetsensor ausgeführt ist.

8. Elektrischer Sitzgurtaufroller (1) nach Anspruch 7, **dadurch gekennzeichnet, dass**
- die magnetischen Markierungen als ein oder mehrere magnetische Schussfäden ausgeführt sind.

9. Elektrischer Sitzgurtaufroller (1) nach einem der Ansprüche 1 bis 8, **dadurch gekennzeichnet, dass**
- der Sensor (5) so angeordnet ist, dass er gegenüber dem Gurtband (3) kontaktlos ist.

## Revendications

1. Rétracteur électrique de ceinture de sécurité (1) comprenant
- un axe (2) et une sangle (3) enroulée sur celui-ci, et
- un moteur électrique (4) entraînant l'axe (2) dans le sens de l'enroulement ou du déroulement lorsqu'il est activé, et
- un dispositif de détection (10) détectant la longueur d'extraction de la sangle, dans lequel
- le dispositif de détection (10) comprend, au moins dans une section de la sangle (3), une formation de plusieurs repères d'identification (6) agencés dans le sens de la longueur de la sangle (3) à équidistance les uns des autres, et
- un détecteur (5) dirigé sur la sangle (3) selon une orientation prédéterminée pour produire un signal lorsqu'un repère d'identification (6) de ladite formation le franchit,
**caractérisé en ce que**
- il est prévu au moins deux détecteurs (5) agencés dans le sens de la longueur de la sangle (3) à distance l'un de l'autre, et
- la formation de repères d'identification (6) comprend un groupe de premiers repères d'identification (7) qui sont identiques et qui produisent un signal identique lorsqu'ils franchissent le détecteur (5), et
- il est prévu au moins un deuxième repère d'identification (8) en une position spécifique de la sangle (3), qui produit un signal différent lorsqu'il franchit le détecteur (5).

2. Rétracteur électrique de ceinture de sécurité (1) selon la revendication 1, **caractérisé en ce que**
- le deuxième repère d'identification (8) est agencé en une section de la sangle (3) qui franchit le détecteur (5) avant que le premier repère d'identification (7) ne franchisse le détecteur (5) lorsque la sangle (3) est extraite d'une position de repos.

3. Rétracteur électrique de ceinture de sécurité (1) selon l'une des revendications 1 et 2, **caractérisé en ce que**
- les repères d'identification (6) sont réalisés par le biais de repères optiques, et
- le détecteur (5) est réalisé par le biais d'un détecteur optique.

4. Rétracteur électrique de ceinture de sécurité (1) selon la revendication 3, **caractérisé en ce que**
- les repères optiques se composent d'un ou plusieurs fils de trame réfléchissants ou colorés.

5. Rétracteur électrique de ceinture de sécurité (1) selon l'une des revendications 1 et 2, **caractérisé en ce que**
- les repères d'identification (6) sont réalisés par le biais de sections conductrices, et
- le détecteur (5) est réalisé par le biais d'un détecteur inductif.

6. Rétracteur électrique de ceinture de sécurité (1) selon la revendication 5, **caractérisé en ce que**
- les sections conductrices sont réalisées par le biais d'un ou plusieurs fils de trame conducteurs de la sangle (3).

7. Rétracteur électrique de ceinture de sécurité (1) selon l'une des revendications 1 et 2, **caractérisé en ce que**
- les repères d'identification (6) sont réalisés par le biais de repères magnétiques, et
- le détecteur (5) est réalisé par le biais d'un détecteur magnétique.

8. Rétracteur électrique de ceinture de sécurité (1) selon la revendication 7, **caractérisé en ce que**
- les repères magnétiques sont réalisés par le biais d'un ou plusieurs fils de trame magnétiques.

9. Rétracteur électrique de ceinture de sécurité (1) selon l'une des revendications 1 à 8, **caractérisé en ce que**
- le détecteur (5) est agencé pour une détection sans contact vis-à-vis de la sangle (3).
